# EUROPEAN PATENT SPECIFICATION

(11) **EP 2 509 787 B1**
(45) Date of publication and mention of the grant of the patent: **06.05.2015**
(21) Application number: 10742687.6
(22) Date of filing: 06.08.2010
(51) Int. Cl.: B32B 21/10, B32B 23/10, B32B 29/02, D04H 1/64

(54) **FIBER REINFORCED COMPOSITE MATERIALS AND METHODS FOR THEIR MANUFACTURE**
FASERVERSTÄRKTE VERBUNDWERKSTOFFE UND VERFAHREN ZU IHRER HERSTELLUNG
MATÉRIAUX COMPOSITES RENFORCÉS PAR DES FIBRES ET PROCÉDÉS POUR LEUR PRÉPARATION

(30) Priority: 09.12.2009 US 633828
(43) Date of publication of application: 17.10.2012
(73) Proprietor: Johns Manville, Denver, CO 80202 (US)
(72) Inventor: SHOOSHTATI, Kiarash, Alavi, Littleton, CO 80127 (US); MIELE, Philip, Francis, Highlands Ranch, CO 80126 (US); ASRAR, Jawed, Englewood, CO 80111 (US)
(74) Representative: Mai, Dörr, Besier
(86) International application number: PCT/US2010/044665
(87) International publication number: WO 2011/071564

(56) References cited:
- EP-A2- 1 988 066
- WO-A2-2008/101678
- GB-A- 2 451 719
- US-A1- 2006 057 923
- US-A1- 2007 082 208

## Description

### CROSS-REFERENCES TO RELATED APPLICATIONS

### BACKGROUND OF THE INVENTION

Wood is a staple of building materials and furniture. In addition to wood solids, composite materials that include wood have well known uses in the manufacture of houses and other buildings, as well as furniture, cabinetry, and other articles. Given the variety and volume of uses to which we put wood and wood-based materials, discovering drawbacks with these materials is inevitable.

In furniture and building materials, it is increasingly common to use wood composites instead of solid wood due to their reduced cost, lighter weight, and easier workability. These wood composites include oriented strand board (OSB), particle board, chipboard, and medium-density wood fiber board (MDF), among others. While these materials are generally good replacements for solid wood as furniture and building materials, they can develop problems over time that affect the quality of the end-product.

For example, wood composites are often have inferior dimensional stability compared to solid wood and other non-cellulosic building materials. Over time, a panel, surface, or beam made from these materials can sag or warp at a faster rate than solid wood. This can create a variety of problems for the article made from these materials, including diminished ascetic quality, loss of structural integrity, and increased vulnerability of the article to moisture and other environmental hazards, among other problems.

One solution to the dimensional stability problem is to use larger, more robust pieces of the material that remain dimensionally stable for longer periods of time. However, larger pieces of material result in increased costs, volume, and weight for the final product. Similar concerns arise when increasing the use of solid wood. Thus, there is a need for improving the dimensional stability and other properties of cellulosic composite materials (e.g., wood composite materials) without significantly increasing the cost, weight or bulk of these materials. These and other problems are addressed.

### BRIEF SUMMARY OF THE INVENTION

Composite materials are described that combine cellulosic materials such as wood and wood composites with one or more fibrous mats that improve the physical characteristics of the composite material without substantially increasing the cost, weight or bulk of the material. The fibrous mats may be made from fibers that are bonded together by a formaldehyde-free binder composition. The fibers in the mats help provide increased dimensional and mechanical stability, increased strength, and reduced weight to the final composite material. These final composites may include engineered wood (EW) materials that have properties equivalent or superior to solid wood at a significantly reduced cost.

Embodiments of the invention include composite materials that have at least one substrate layer, and at least one fibrous mat. The fibrous mat may include fibers in a cured binder made from a binder composition that includes a carbohydrate and an amino-amide. The amino-amide may be formed from a reaction of an amine and an acid anhydride.

Embodiments of the invention further include composite materials that have a substrate which contains a cellulosic material. The composites further include a non-woven glass fiber mat contacting at least one surface of the substrate. The non-woven glass fiber mat may include glass fibers bonded together in a fully cured binder material made from a "B"-stage curable binder composition that includes dextrose and an amino-amide. The amino-amide may be a reaction product of 1,6-hexamethylenediamine and maleic anhydride.

Embodiments of the invention further include partially-cured composite materials that have at least one substrate layer and at least one partially-cured fibrous mat. The partially-cured fibrous mats may include fibers in a partially-cured, "B"-stage curable binder made from a binder composition comprising a carbohydrate and an amino-amide, wherein the amino-amide is formed from a reaction of an amine and an acid anhydride. In some embodiments, the substrate layer (or layers) may also be in a partially-cured state.

Embodiments of the invention may also include methods of making a composite material. The methods may include the steps of providing a first substrate layer and contacting the first substrate layer with a fibrous mat that includes fibers in a partially cured, "B"-stage binder made from a binder composition that includes a carbohydrate and an amino-amide. The amino-amide may be formed from a reaction of an amine and an acid anhydride. The fibrous mat in contact with the first substrate layer may be cured to make a fully-cured binder.

Additional embodiments and features are set forth in part in the description that follows, and in part will become apparent to those skilled in the art upon examination of the specification or may be learned by the practice of the invention. The features and advantages of the invention may be realized and attained by means of the instrumentalities, combinations, and methods described in the specification.

### DETAILED DESCRIPTION OF THE INVENTION

Composite materials are described that combine the physical and ascetic properties of traditional cellulosic materials, such as wood, with fiber mat composites. This combination gives the materials improved characteristics such as increased dimensional and mechanical stability, increased strength, reduced weight, and better workability, among other characteristics. For example, conventional cellulosic building materials such as particleboard, oriented strand board (OSB) and medium-density wood fiber board (MDF) often warp and/or sag over time. When fiber mat composites are combined with these materials to produce the present composites, the fiber and binder significantly reduce the rate of warping and sagging. They can also strengthen the materials and reduce their vulnerability to moisture, heat, and sunlight, among other potentially damaging environmental factors.

The present composite materials may include the combination of a substrate layer and a fiber mat layer. The substrate layer may be made from a single material (e.g., a cellulosic material such as wood) or a combination of materials that may make the substrate layer a composite layer. Examples of materials that may be used in the substrate layer may include wooden materials, paper, cork, vegetable materials, animal materials, cardboards, mineral plates, and/or honeycombs.

Examples of wooden materials may include plate-shaped and/or strand-shaped wooden materials manufactured by mixing the different wooden particle forms with natural and/or synthetic binding agents during a hot pressing. Wooden materials may also include plywood, laminated wood, wood-chip material, chipboard, particleboard, oriented strand board (OSB), wood fiber material, porous wood fiber boards, open-diffusion wood fiber boards, high-density (e.g., hard) wood fiber board (HDF), and medium-density wood fiber board (MDF), among other types of wooden materials. Wooden materials may additional include Arboform^{™}, a thermoplastically workable material of lignin and other wood components.

Examples of paper materials may include paper made from natural fibers, synthetic fibers, mineral fibers, and/or ceramic fibers. Similarly, examples of cardboard materials may include cardboard made from natural, synthetic, mineral, and/or ceramic fibers.

Examples of vegetable materials may include natural fibers and vegetable fibers made from grasses, straw, wood, bamboo, reed, and/or bast. Vegetable materials may also include plant fibers and seed fibers such as cotton, kapok, poplar fluff; bast fibers such as bamboo fiber, hemp, jute, linen or ramine; hart fibers such as sisal and manila; and fruit fibers such as coconut. Examples of animal materials may include fibers of animal origin such as wools, hairs, feathers, and/or silks, among other animal derived fibers.

Examples of mineral plates may include mineral cardboard plates with cardboard coatings on one or more sides of the plate. Mineral plates may also include gypsum fiber plates, ceramic fiber plates, cement plates, and/or lime plates. The mineral plates may be reinforced with natural, synthetic, mineral, and/or ceramic fibers. These reinforcement fibers may be filaments, monofilaments, and/or staple fibers.

Examples of honeycombs may include structural materials with three-dimensional reinforcement structures that increase the dimensional stability and strength of the material while also reducing the weight of the material. Honeycombs may be used for internal reinforcement in construction materials and furniture, among other applications.

The fiber mat layer may include a combination of fibers and a binder that holds the fibers together. Embodiments of the fiber mat include mats made from a composite of non-woven fibers that collectively form a fabric with a formaldehyde-free binder. The fibers may include inorganic fibers, organic fibers, natural fibers, synthetic fibers, ceramic fibers, glass fibers, mineral fibers, carbon fibers, plastic fibers, or combinations of these fibers. Glass fibers may be formed from A-glass, C-glass, E-glass, S-glass, T-glass, or R-glass, among other types of glass. Synthetic fibers may be made from spun-bonded synthetic polymers that are produced by a tangled deposit of melt-spun filaments. These spun-bond filaments may include a continuous fiber of the synthetic polymer material. The polymer material may include polyamides (e.g., polyhexamethylene diadipamide), polycaprolactams, aromatic or partially aromatic polyamides (e.g., aramides), aliphatic polyamides (e.g., nylon), aliphatic polyester, partially aromatic or fully aromatic polyesters, polyphenylene sulfides (PPSs), polymers with ether- and keto- groups (e.g., polyetherketones (PEKs), and polyetheretherketones (PEEKs)), polyolefins (e.g., polyethylene, polypropylene, etc.), cellulose, and/or polybenzimidazoles, among other polymers. Individual titers of synthetic fibers in the fabric of the fiber mat may be between about 1 dtex and about 16 dtex (e.g., about 2 dtex to about 10 dtex).

The fabric of the fiber mat may be formed from filaments which may include long fibers, staple fibers, or a combination of both. Staple fibers may have lengths ranging from about 5 and about 120 mm (e.g., about 10 to about 90 mm). Additional embodiments include fibers with lengths that may be longer or shorter. The fibers may have an average cross-sectional diameter from about 5 µm to about 30 µm (e.g., about 8 µm to about 24 µm; about 8 µm to about 15 µm; about 10 µm to about 21 µm; etc.). Exemplary weight per unit area of the binderless fibers that make up the fabric may be about 15 g/m² to about 500 g/m² (e.g., 40 g/m² to about 250 g/m²).

Exemplary fibers for the fiber mat may also include microfibers (e.g., glass microfibers) that have an average cross-sectional diameter of about 0.1 µm to about 5 µm. The microfibers may be used in combination with other dimensioned fibers in the fabric. When fibers are used with a plurality of dimensions (e.g., a combination long fibers, staple fibers, and microfibers) they may be homogenously distributed in the fabric, or they may be non-homogenously distributed. For example, the fibers may have a layer-shaped arrangement in the fabric.

The fiber mat may further include reinforcement fibers, threads, and/or filaments. Reinforcement threads may include multi-filaments or rovings made of glass, polyester, carbon and/or metal, among other materials. The reinforcement threads may be randomly distributed in a non-woven fabric, and/or be organized into a laying, knitted fabric, knitwear, etc. For example, the reinforcement threads may be arranged as a parallel thread sheet, a fibrous scrim, or a laying.

The binder may start with a liquid or aqueous phase binder composition that includes a carbohydrate (e.g., a reducing sugar such as dextrose) and an amino-amide. The amino-amide may be formed from a reaction of an amine (e.g., 1,6-hexamethylenediamine (HMDA)) and an acid anhydride (e.g., maleic anhydride (MA)).

The reactants that form the amino-amide may undergo a conjugate addition. In these instances, the amine selected may be a diamine or multi-functional primary or secondary amine. For example, the amine may be a diamine with at least one primary amine group. Amines used to make the amino-amine may include aliphatic amines, cycloaliphatic amines, and aromatic amines, among other kinds of amines. The amines may be linear or branched. The amine functionalities may include di-functional and multi-functional primary and/or secondary amines. The amines may also include other functional groups and linkages, such as alcohols, thiols, esters, amides, and ethers, among others. Specific examples of amines may include 1,2-diethylamine, 1,3-propanediamine, 1,4-butanediamine, 1,5-pentanediamine, 1,6-hexamethylenediamine, α, α'-diaminoxylene, diethylenetriamine, triethylenetetramine, tetraethylenepentamine, as well as combinations of these amines, among other amines. Natural and synthetic amino acids (e.g., lysine, arginine, histidine, etc.) may also be used.

The curable amino-amide may be formed from the reaction of the amine with a saturated or unsaturated reactant such as an anhydride, a carboxylic acid, an ester, or salts and/or mixtures of these reactants. Specific examples of these reactants may include maleic acid, fumaric acid, maleic anhydride, mono- and di-esters of maleic acid and fumaric acid, and salts and/or combinations of these reactants. Ammonium salts of the unsaturated acids of their monoesters may also be utilized. Specific examples of saturated reactants include, succinic anhydride, succinic acid, mono- and di-esters of succinic acid, glutaric acid and anhydride, phthalic acid and anhydride, tetrahydro phthalic anhydride, and anhydrides and salts of the acids and their mono esters.

The amino-amide addition products can be readily formed by mixing the reactants in an aqueous medium at temperatures of about 25 °C to about 100 °C. The resulting amino-amide addition products may be water soluble, water dispersible, or present as an emulsion with the aqueous phase.

The carbohydrate may be added to the amino-amine solution or mixture to form the binder composition. While some reaction is expected between the carbohydrate and amino-amine, room temperature reactivity of these compounds is relatively slight prior to heating the binder composition to curing temperatures. The carbohydrate reacts with the amino-amide intermediate containing the amic acid functional group (i.e., an amide linkage in the vicinity of a carboxylic acid). The molar ratio of carbohydrate to amino-amide in the binder composition may be from about 1:50 to about 50:1 (e.g., a carbohydrate to amino-amide mole ratio of about 1:20 to about 20:1, about 1:10 to about 10:1, etc.). Examples of carbohydrates that may react with the amino-amides include reducing mono-, di-, and polysaccharides such as glucose, maltose, dextrose, and celobiose, among other saccharides.

The amino-amide/carbohydrate binder compositions are formaldehyde free. They also include all the reactive functional groups (e.g., amine, amide, and carboxylic acid) required for crosslinking the binder composition during curing. While additional crosslinking compositions may be added to the binder composition (e.g., polycarboxylic acids, polyvinyl alcohols, etc.), they are not required for the binder composition to undergo crosslinking when the binder fully cures.

The amino-amide may optionally be oligomerized before contacting the carbohydrate. The oligomerization may include heating the amino-amide intermediates until oligomers (e.g., dimers, trimers, tetramers, etc.) of the amino-amide are formed. The heating step may involve, for example, heating the amino-amides in a temperature range of about 120 °C to about 150 °C for a time that may range up to about 5 hours. For some compositions, the oligomerized amino-amides may form a stronger cured binder than a similar composition of monomeric amino-amides.

The binder compositions may also optionally contain other compounds in addition to amino-amides and carbohydrates. These other compounds may include adhesion promoters, solvents, emulsifiers, pigments, fillers, anti-migration aids, coalescent aids, wetting agents, biocides, plasticizers, organosilanes, anti-foaming agents, colorants, waxes, suspending agents, anti-oxidants, crosslinking catalysts, corrosion inhibitors, and/or additional crosslinking agents among other compounds.

### Methods of Forming the B-Stage Binders

The present binder compositions are capable of undergoing multiple stages of curing before they are finally cured to form the composite material. For example, the initial binder composition added to the fibers may undergo a two-stage curing process where the first stage partially cures the binder to form a flexible, partially-hardened fiber mat. This flexible mat may have relatively low tackiness and may be formed into sheets that can be folded and/or rolled for more efficient storage and transportation. The partially cured fiber mats may be unfurled into sheets and placed in contact with one or more substrate layers during the formation of the composite material. The fiber mat may then be finally hardened in a second cure stage involving the application of heat and/or pressure.

The partially-cured binders may be referred to as "B"-stage curable binders. B-stage binders are harder and stronger than the starting binder composition, but still capable of experiencing additional curing, hardening, and strengthening to form a fully-cured binder. A binder composition cured to the B-stage often undergoes a phase transition from a liquid/solution phase of the initial composition to a gel or flexible solid phase. When the B-stage binder is part of a fiber mat, the mat may be formed as planar sheets that can be folded or rolled.

The formation of the B-stage binder may involve stopping the binder curing process before the binder has fully cured. For example, in the formation of a fiber mat, the initial binder composition applied to the fibers may be dried and heated at lower temperatures and/or reduced times than needed to fully cure the binder. Forming a B-stage binder from an amino-amide/carbohydrate binder composition may involve heating the fibrous mat containing the binder composition for about 1 minute to about 4 minutes at a temperature ranging from about 25 °C to about 150 °C.

### Methods of Making Substrate and Fiber Mat Composites

The fibrous mats containing a partially cured, B-stage binder may be used to make the present composite materials. Methods of making these composite materials may include the step of providing a first substrate layer, and contacting the substrate layer with a fibrous mat made from fibers in a partially-cured "B"-stage binder. After the substrate layer and fibrous mat are contacted together, the fibrous mat may be cured to make a fully-cured binder. The fully-cured binder may have increased strength, rigidity, tear-strength, and hot-wet strength (among other properties) compared to the B-stage binder.

The methods may also optionally include adding one or more functional materials to the substrate layer, the fibrous mat and/or the composite material. These functional materials may include flameproofing agents, materials for discharging electrostatic materials, materials for screening off electromagnetic rays, organic and/or inorganic pigments (e.g., colored pigments), materials that increase the resistance to wear and/or slippage, and decorative materials (e.g., decorative layers), among other kinds of functional materials. When functional materials are applied to an outer layer of the composite material after the fibrous mat has been cured, they may be applied to a surface of the substrate layer that is not in contact with the fibrous mat, to an exposed surface of the fibrous mat that is not in direct contact with the substrate.

The methods of making the composite material may start with the formation of the partially-cured fibrous mat. The methods of making the fibrous mat may include providing a slurry of fibers (e.g., glass fibers) and metering the slurry into a stream of whitewater (e.g., cationic or non-ionic whitewater). This suspension of fiber slurry and whitewater may be formed into a wet non-woven mat by placing the suspension on a moving, permeable surface (e.g., a wire mesh screen) that separates the wet, non-woven fiber fabric from the liquid phase of the suspension (i.e., dewatering the fiber slurry).

The non-woven fiber fabric may then be transferred to a second moving, permeable surface that introduces the fabric to the binder composition. The binder composition may be applied to the fabric in a variety of techniques, including a curtain coater; a dip and squeeze applicator; or spraying, among other techniques. Excess binder composition may be removed from the fabric by gravity separation through the porous surface and/or suction.

The relative amounts of fiber to binder may range from about 25 wt.% to about 85 wt.% fibers and about 15 wt.% to about 75 wt.% binder. For example, the fibrous mat may contain about 80 wt.% fibers and 20 wt.% binder, 51 wt.% fibers and 49 wt.% binder, 45 wt.% fibers and 55 wt.% binder, etc.

The uncured mixture of the non-woven fiber fabric and initial binder composition may then be partially cured to form a B-stage fibrous mat. The curing step may involve the transport of the mixture through a drying and curing oven that exposes the mixture to elevated temperatures for a given time period. As noted above, the difference between the formation of a B-stage fibrous mat and a fully-cured fibrous mat may be the temperature and/or time period that the mixture is exposed to the drying and curing oven. Generally, the lower the temperature selected for curing, the longer the time required to form the B-stage fibrous mat. The temperature may be selected such that the B-stage fibrous mat is formed in about two minutes or less (e.g., about 1 minute or less, about 50 seconds or less, about 40 seconds or less, about 30 seconds or less, about 20 seconds or less, about 10 seconds or less, etc.).

In some examples, the B-stage fibrous mats have low-tack, and may be reversibly wound into rolls and packaged while awaiting application to the substrate layer. In other examples, the fibrous mat production may be done at the same location as the production of the final composite material, and the B-stage fibrous mats make be formed or cut to the appropriate shape for direct application to the substrate layers. Depending on the specific binder composition used, the B-stage fibrous mats may be stored without protection from a humid atmosphere. However, if the B-stage fiber is hydroscopic, steps may be taken to stretch wrap or shrink wrap the fibrous mat in a package that prevents atmospheric moisture from being absorbed into the mat.

The B-stage fibrous mat has enough strength for further processing with the substrate layer, while also having the ability to bond with the substrate layer and flow (e.g., plastic deformation) under heat and/or pressure before being finally cured in contact with the substrate layer. In this sense, the B-stage fibrous mat acts like a thermoplastic polymer that permits the flow and densification of the fibrous mat without damaging the fibers before becoming a fully-cured mat that has binder properties more similar to a thermoset polymer.

Another method of making a B-stage fibrous mat may include preparing a base mat that is fully cured with a binder composition (e.g., about 5% to about 30% binder composition, about 10% binder composition, etc.). The binder composition used in the fully-cured base mat may be the same binder composition used to make the B-stage fibrous mat, or a different kind of binder composition. These different kind of binder compositions may include any standard binder composition suitable for making the fully-cured base mat, and may include thermoset and/or thermoplastic binders capable of meeting the performance characteristics of the final composite material (e.g., an engineered wood composite). The fully-cured base mat may be formed into rolls that are subsequently contacted, post-production, with the binder composition. The addition of the binder composition to the fully-cured base mat produces a B-stage fibrous mat.

In the final stages of making the composite material, the B-stage fibrous mat in contact with the substrate layer is cured to reach a fully-cured state. One or more layers of the B-stage fibrous mat in contact with one or more substrate layers may be subject to heat and/or pressure to effect the final curing of the binder. A hot press may be used for the final curing, exposing the B-stage fibrous mat to increased pressure (e.g., up to about 100 bar) and temperature (e.g., about 100 °C to about 250 °C) for a time period that converts the B-stage fibrous mat into a fully-cured mat.

Alternatively, the B-stage fibrous mat may contact a substrate layer made of cellulosic materials as the cellulosic materials are being formed. In some instances, the substrate layer may be in a less than fully cured or formed state similar to the B-stage fibrous mat. In these instances, exposing both the substrate layer and the B-stage fibrous mat to increased heat and/or pressure may allow both to be fully-cured in a single curing step.

Before or after the fibrous mat contacts the substrate layer (or before or after the B-stage fibrous mat is finally cured), one or more functional materials may be added to the fibrous mat, the substrate layer, or both. These functional materials may include flameproofing agents such as inorganic flameproofing agents, organophosphorous flameproofing agents, nitrogen-based flameproofing agents, intumescence flameproofing agents, and halogenated flameproofing agents, among other kind of flameproofing agents. The functional materials may also include antistatic and electromagnetic screening agents such as electrically conductive particles of carbon (e.g., carbon black), graphite, carbon nanotubes, and/or graphine particle, among others. Antistatic and/or electromagnetic screening agents may also include electrically conductive threads, wires, fibers, and foils, and textiles, among other materials.

The functional materials may further include inorganic and/or organic pigments. They may also include fillers such as calcium carbonate, talcum, gypsum, and/or silica, among other filler materials. The functional materials may further include anti-slippage coatings on one or more exterior surfaces of the composite material. The functional materials may also include decorative materials such as pattern materials, veneer materials, cork, decorative paper, foils and laminates with simulated wood grains, overlay papers, high-pressure laminates (HPLs), continuous-pressure laminates (CPLs), and/or chips of paper or plastic with different colors, among other decorative materials. It will be appreciated that other functional materials not explicitly listed here may also be added during or after the production of the composite materials.

The methods above generally describe one B-staged fibrous mat in contact with one substrate layer that together make the composite material. It should be noted however, that a plurality of B-stage fibrous mats and/or substrate layers may be used to make the final composite material. For example, the B-stage fibrous mat may be sandwiched between two substrate layers that make contact with opposite surfaces of the fibrous mat. Alternatively, two B-stage fibrous mats may contact opposite sides of a single substrate layer prior to the combination being finally cured. Also possible are stacks of fibrous mats and substrate layers that make up the final composite material.

Having described several embodiments, it will be recognized by those of skill in the art that various modifications, alternative constructions, and equivalents may be used. Additionally, a number of well-known processes and elements have not been described in order to avoid unnecessarily obscuring the present invention. Accordingly, the above description should not be taken as limiting the scope of the invention.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed. The upper and lower limits of these smaller ranges may independently be included or excluded in the range, and each range where either, neither or both limits are included in the smaller ranges is also encompassed within the invention, subject to any specifically excluded limit in the stated range. Where the stated range includes one or both of the limits, ranges excluding either or both of those included limits are also included.

As used herein and in the appended claims, the singular forms "a", "an", and "the" include plural referents unless the context clearly dictates otherwise. Thus, for example, reference to "a process" includes a plurality of such processes and reference to "the material" includes reference to one or more materials and equivalents thereof known to those skilled in the art, and so forth.

Also, the words "comprise," "comprising," "include," "including," and "includes" when used in this specification and in the following claims are intended to specify the presence of stated features, integers, components, or steps, but they do not preclude the presence or addition of one or more other features, integers, components, steps, acts, or groups.

## Claims

1. A composite material comprising:
at least one substrate layer; and
at least one fibrous mat, wherein the fibrous mat includes fibers in a cured binder made from a binder composition comprising a carbohydrate and an amino-amide, wherein the amino-amide is formed from a reaction of an amine and an acid anhydride.

2. The composite material of claim 1, wherein the substrate layer comprises one or more cellulosic materials.

3. The composite material of claim 1, wherein the substrate layer comprises a cellulosic composite of a cellulosic material and a cellusosic binder.

4. The composite material of claim 1, wherein the substrate layer comprises wood, paper, cork, cardboard, mineral plates, or honeycombs.

5. The composite material of claim 1, wherein the substrate layer is selected from the group consisting of plywood, laminated wood, wood-chip material, chipboard, oriented strand board, wood fiber material, porous wood fiber board, open-diffusion wood board, high-density wood fiber board and medium-density wood fiber board.

6. The composite material of claim 1, wherein the fibrous mat comprises non-woven fibers.

7. The composite material of claim 1, wherein the fibers in the fibrous mat comprise inorganic fibers, organic fibers, natural fibers, synthetic fibers, ceramic fibers, glass fibers, mineral fibers, carbon fibers, or plastic fibers.

8. The composite material of claim 1, wherein the carbohydrate comprises a reducing sugar.

9. The composite material of claim 1, wherein the carbohydrate comprises dextrose.

10. The composite material of claim 1, wherein the amino-amide is formed from the reaction of 1,6-hexamethylenediamine and maleic anhydride.

11. The composite material of claim 1, wherein the cured binder is formed from a "B"-stage curable composite of the fibers and the binder composition, wherein the "B"-stage curable composite is applied to the substrate before the binder is fully cured.

12. The composite material of claim 1, wherein the composite material comprises a plurality of the substrates.

13. The composite material of claim 12, wherein the composite material comprises a fibrous mat positioned between a first substrate layer and a second substrate layer, wherein the fibrous mat adheres to both the first and second substrate layers.

14. The composite material of claim 1, wherein the composite material comprises a plurality of the fibrous mats.

15. The composite material of claim 1, wherein the composite material comprises engineered wood.

16. A partially-cured composite material comprising:
at least one substrate layer; and
at least one partially-cured fibrous mat, wherein the fibrous mat includes fibers in a partially-cured, "B"-stage curable binder made from a binder composition comprising a carbohydrate and an amino-amide, wherein the amino-amide is formed from a reaction of an amine and an acid anhydride.

17. The partially-cured composite material of claim 16, wherein the at least one substrate is also in a partially-cured state.

18. A method of making a composite material, the method comprising:
providing a first substrate layer;
contacting the first substrate layer with a fibrous mat comprising fibers in a partially cured, "B"-stage binder made from a binder composition comprising a carbohydrate and an amino-amide, wherein the amino-amide is formed from a reaction of an amine and an acid anhydride; and
curing the fibrous mat in contact with the first substrate layer to make a fully-cured binder.

19. The method of claim 18, wherein the first substrate layer is selected from the group consisting of plywood, laminated wood, wood-chip material, chipboard, oriented strand board, wood fiber material, porous wood fiber board, open-diffusion wood board, high-density wood fiber board and medium-density wood fiber board.

20. The method of claim 18, wherein the fibrous mat is made by:
dewatering an aqueous slurry of the fibers to form a non-woven fibrous mat;
applying the binder composition to the non-woven fibrous mat to make an uncured fibrous mat; and
heating the uncured fibrous mat to partially cure the binder composition into the "B"-stage binder.

21. The method of claim 18, wherein the fibrous mat is made by:
providing a base mat comprising the fibers in a fully-cured binder; and
adding the binder composition to the base mat to make the fibrous mat, wherein combination of the fully-cured binder and the binder composition form the "B"-stage binder in the fibrous mat.

22. The method of claim 21, wherein the fully-cured binder in the base mat comprises a standard binder that is different than the binder composition used to make the fibrous mat.

23. The method of claim 18, wherein the curing of the fibrous mat in contact with the first substrate layer comprises applying heat and pressure to the fibrous mat.

24. The method of claim 18, wherein the first substrate layer is in a partially-cured state prior to the contacting of the first substrate layer with a fibrous mat.

25. The method of claim 24, wherein the partially-cured first substrate layer is fully-cured during the curing of the fibrous mat.

26. The method of claim 18, wherein the method further comprises:
prior to curing the fibrous mat, contacting the fibrous mat with a second substrate layer, wherein the second substrate layer contacts a surface of the fibrous mat that is opposite a surface in contact with the first substrate layer.

## Patentansprüche

1. Verbundwerkstoff, Folgendes umfassend:
mindestens eine Substratschicht; und
mindestens eine Fasermatte, wobei die Fasermatte Fasern in einem gehärteten Bindemittel enthält, das aus einer Bindemittelzusammensetzung hergestellt ist, die ein Kohlenhydrat und ein Aminoamid umfasst, wobei das Aminoamid aus einer Reaktion eines Amins und eines Säureanhydrids gebildet ist.

2. Verbundwerkstoff nach Anspruch 1, wobei die Substratschicht ein oder mehrere Cellulosematerialien umfasst.

3. Verbundwerkstoff nach Anspruch 1, wobei die Substratschicht einen Celluloseverbundstoff aus einem Cellulosematerial und einem Cellulosebindemittel umfasst.

4. Verbundwerkstoff nach Anspruch 1, wobei die Substratschicht Holz, Papier, Kork, Karton, Mineralplatten oder Waben umfasst.

5. Verbundwerkstoff nach Anspruch 1, wobei die Substratschicht aus der Gruppe ausgewählt ist, die aus Sperrholz, laminiertem Holz, Holzschnitzelmaterial, Spanplatte, OSB-Platte, Holzfasermaterial, poröser Holzfaserplatte, diffusionsoffener Holzplatte, hochdichter Holzfaserplatte und mitteldichter Holzfaserplatte besteht.

6. Verbundwerkstoff nach Anspruch 1, wobei die Fasermatte Vliesfasern umfasst.

7. Verbundwerkstoff nach Anspruch 1, wobei die Fasern in der Fasermatte anorganische Fasern, organische Fasern, Naturfasern, synthetische Fasern, keramische Fasern, Glasfasern, Mineralfasern, Carbonfasern oder Kunststofffasern umfassen.

8. Verbundwerkstoff nach Anspruch 1, wobei das Kohlenhydrat einen reduzierenden Zucker umfasst.

9. Verbundwerkstoff nach Anspruch 1, wobei das Kohlenhydrat Dextrose umfasst.

10. Verbundwerkstoff nach Anspruch 1, wobei das Aminoamid aus der Reaktion von 1,6-Hexamethylendiamin und Maleinsäureanhydrid gebildet ist.

11. Verbundwerkstoff nach Anspruch 1, wobei das gehärtete Bindemittel aus einem härtbaren Verbundstoff im B-Zustand aus den Fasern und der Bindemittelzusammensetzung gebildet ist, wobei der härtbare Verbundstoff im B-Zustand vor dem vollständigen Aushärten des Bindemittels auf das Substrat aufgebracht wird.

12. Verbundwerkstoff nach Anspruch 1, wobei der Verbundwerkstoff mehrere Substrate umfasst.

13. Verbundwerkstoff nach Anspruch 12, wobei der Verbundwerkstoff eine Fasermatte umfasst, die zwischen einer ersten Substratschicht und einer zweiten Substratschicht positioniert ist, wobei die Fasermatte an sowohl der ersten als auch der zweiten Substratschicht haftet.

14. Verbundwerkstoff nach Anspruch 1, wobei der Verbundwerkstoff mehrere Fasermatten umfasst.

15. Verbundwerkstoff nach Anspruch 1, wobei der Verbundwerkstoff Holzwerkstoff umfasst.

16. Teilweise gehärteter Verbundwerkstoff, Folgendes umfassend:
mindestens eine Substratschicht; und
mindestens eine teilweise gehärtete Fasermatte, wobei die Fasermatte Fasern in einem teilweise gehärteten härtbaren Bindemittel im B-Zustand enthält, das aus einer Bindemittelzusammensetzung hergestellt ist, die ein Kohlenhydrat und ein Aminoamid umfasst, wobei das Aminoamid aus einer Reaktion eines Amins und eines Säureanhydrids gebildet ist.

17. Teilweise gehärteter Verbundwerkstoff nach Anspruch 16, wobei sich das mindestens eine Substrat ebenfalls in einem teilweise gehärteten Zustand befindet.

18. Verfahren zur Herstellung eines Verbundwerkstoffs, wobei das Verfahren Folgendes umfasst:
Bereitstellen einer ersten Substratschicht;
In-Kontakt-Bringen der ersten Substratschicht mit einer Fasermatte, die Fasern in einem teilweise gehärteten härtbaren Bindemittel im B-Zustand umfasst, das aus einer Bindemittelzusammensetzung besteht, die ein Kohlenhydrat und ein Aminoamid umfasst, wobei das Aminoamid aus einer Reaktion eines Amins und eines Säureanhydrids gebildet ist, und
Härten der Fasermatte in Kontakt mit der ersten Substratschicht, um ein vollständig gehärtetes Bindemittel herzustellen.

19. Verfahren nach Anspruch 18, wobei die erste Substratschicht aus der Gruppe ausgewählt ist, die aus Sperrholz, laminiertem Holz, Holzschnitzelmaterial, Spanplatte, OSB-Platte, Holzfasermaterial, poröser Holzfaserplatte, diffusionsoffener Holzplatte, hochdichter Holzfaserplatte und mitteldichter Holzfaserplatte besteht.

20. Verfahren nach Anspruch 18, wobei die Fasermatte durch Folgendes hergestellt wird:
Entwässern einer wässrigen Aufschlämmung aus den Fasern, um eine Vliesfasermatte zu bilden;
Aufbringen der Bindemittelzusammensetzung auf die Vliesfasermatte, um eine nicht gehärtete Fasermatte herzustellen; und
Erwärmen der nicht gehärteten Fasermatte, um die Bindemittelzusammensetzung zu einem Bindemittel im B-Zustand zu härten.

21. Verfahren nach Anspruch 18, wobei die Fasermatte durch Folgendes hergestellt wird:
Bereitstellen einer Grundmatte, welche die Fasern in einem vollständig gehärteten Bindemittel umfasst; und
Zusetzen der Bindemittelzusammensetzung zur Grundmatte, um die Fasermatte herzustellen, wobei die Kombination aus dem vollständig gehärteten Bindemittel und der Bindemittelzusammensetzung das Bindemittel im B-Zustand in der Fasermatte bildet.

22. Verfahren nach Anspruch 21, wobei das vollständig gehärtete Bindemittel in der Grundmatte ein Standardbindemittel umfasst, das sich von der Bindemittelzusammensetzung unterscheidet, die zur Herstellung der Fasermatte verwendet wird.

23. Verfahren nach Anspruch 18, wobei das Härten der Fasermatte in Kontakt mit der ersten Substratschicht das Anwenden von Wärme und Druck auf die Fasermatte umfasst.

24. Verfahren nach Anspruch 18, wobei sich die erste Substratschicht vor dem Kontakt der ersten Substratschicht mit einer Fasermatte in einem teilweise gehärteten Zustand befindet.

25. Verfahren nach Anspruch 24, wobei die teilweise gehärtete erste Substratschicht während des Härtens der Fasermatte vollständig gehärtet wird.

26. Verfahren nach Anspruch 18, wobei das Verfahren ferner Folgendes umfasst:
vor dem Härten der Fasermatte In-Kontakt-Bringen der Fasermatte mit einer zweiten Substratschicht, wobei die zweite Substratschicht eine Oberfläche der Fasermatte kontaktiert, die gegenüber einer Oberfläche liegt, die in Kontakt mit der ersten Substratschicht steht.

## Revendications

1. Matériau composite comprenant:
- au moins une couche de substrat; et
- au moins un tapis fibreux, où le tapis fibreux comprend les fibres dans un liant durci fait d'une composition de liant comprenant un carbohydrate et un amino-amide, où l'amino-amide est formé par une réaction d'une amine et un anhydride acide.

2. Matériau composite selon la revendication 1, où la couche de substrat comprend un ou plusieurs matériaux cellulosiques.

3. Matériau composite selon la revendication 1, où la couche de substrat comprend un composite cellulosique d'un matériau cellulosique et un liant cellulosique.

4. Matériau composite selon la revendication 1, où la couche de substrat comprend bois, papier, liège, carton, plaques minérales, ou rayons de miel.

5. Matériau composite selon la revendication 1, où la couche de substrat est sélecté du groupe formé de placage, bois laminé, matériau à copeaux de bois, plaque agglomérée, plaque à copeaux orientés, matériau en fibres de bois, plaque en fibres de bois poreuse, plaque de bois ouverte à la diffusion, plaque en fibres de bois de haute densité et plaque en fibres de bois de moyenne densité.

6. Matériau composite selon la revendication 1, où le tapis fibreux comprend les fibres non tissées.

7. Matériau composite selon la revendication 1, où les fibres dans le tapis fibreux comprennent les fibres inorganiques, les fibres organiques, les fibres naturelles, les fibres synthétiques, les fibres céramiques, les fibres de verre, les fibres minérales, les fibres de carbone, ou les fibres en plastique.

8. Matériau composite selon la revendication 1, où le carbohydrate comprend un sucre de réduction.

9. Matériau composite selon la revendication 1, où le carbohydrate comprend le dextrose.

10. Matériau composite selon la revendication 1, où l'amino-amide est formé par la réaction de la 1,6-hexaméthylènediamine et l'anhydride maléique.

11. Matériau composite selon la revendication 1, où le liant durci est formé du composite durcissable de stade "B" des fibres et de la composition de liant, où le composite durcissable de stade "B" est appliqué au substrat avant que le liant soit complètement durci.

12. Matériau composite selon la revendication 1, où le matériau composite comprend une pluralité de substrats.

13. Matériau composite selon la revendication 12, où le matériau composite comprend un tapis fibreux positionné entre une première couche de substrat et une seconde couche de substrat, où le tapis fibreux adhère tant à la première que à la seconde couches de substrat.

14. Matériau composite selon la revendication 1, où le matériau composite comprend une pluralité de tapis fibreux.

15. Matériau composite selon la revendication 1, où le matériau composite comprend le bois d'ingénierie.

16. Matériau composite partiellement durci comprenant:
- au moins une couche de substrat; et
- au moins un tapis fibreux partiellement durci, où le tapis fibreux comprend les fibres dans un liant durcissable de stade "B" partiellement durci fait d'une composition de liant, comprenant un carbohydrate et un amino-amide, où l'amino-amide est formé dans une réaction d'entre une amine et un anhydride acide.

17. Matériau composite partiellement durci selon la revendication 16, où au moins un substrat est aussi dans un état partiellement durci.

18. Procédé de préparation un matériau composite, le procédé comprenant:
- pourvoir une première couche de substrat;
- contacter la première couche de substrat avec un tapis fibreux comprenant les fibres dans un liant de stade "B" partiellement durci fait d'une composition de liant comprenant un carbohydrate et un amino-amide, où l'amino-amide est formé dans une réaction d'entre une amine et un anhydride acide; et
- durcir le tapis fibreux en contact avec la première couche de substrat pour obtenir un liant complètement durci.

19. Procédé selon la revendication 18, où la première couche de substrat est sélectée du groupe formé de placage, bois laminé, matériau à copeaux de bois, plaque agglomérée, plaque à copeaux orientés, matériau en fibres de bois, plaque en fibres de bois poreuse, plaque de bois ouverte à la diffusion, plaque en fibres de bois de haute densité et plaque en fibres de bois de moyenne densité.

20. Procédé selon la revendication 18, où le tapis fibreux est fait par:
- déshydrater une suspension aqueuse de fibres pour former un tapis fibreux non tissé;
- appliquer la composition de liant au tapis fibreux non tissé pour produire un tapis fibreux non durci; et
- réchauffer le tapis fibreux non durci pour durcir partiellement la composition de liant dans le liant der stade "B".

21. Procédé selon la revendication 18, où le tapis fibreux est fait par:
- pourvoir un tapis de base comprenant les fibres dans un liant complètement durci; et
- ajouter la composition de liant au tapis de base pour produire le tapis fibreux, où la combinaison du liant complètement durci et de la composition de liant forme le liant de stade "B" dans le tapis fibreux.

22. Procédé selon la revendication 21, où le liant complètement durci dans le tapis de base comprend un liant standard qui est différent de la composition de liant utilisée pour produire le tapis fibreux.

23. Procédé selon la revendication 18, où le durcissement du tapis fibreux en contact avec la première couche de substrat comprend appliquer la chaleur et la pression au tapis fibreux.

24. Procédé selon la revendication 18, où la première couche de substrat est dans un état partiellement durci avant le contact de la première couche de substrat avec un tapis fibreux.

25. Procédé selon la revendication 24, où la première couche de substrat partiellement durcie est complètement durcie pendant le durcissement du tapis fibreux.

26. Procédé selon la revendication 18, où le procédé comprend de plus:
- avant de durcir le tapis fibreux, contacter le tapis fibreux avec une seconde couche de substrat, où la seconde couche de substrat contacte une surface du tapis fibreux qui est opposée à une surface en contact avec la première couche de substrat.
